# EUROPEAN PATENT APPLICATION

(11) **EP 2 840 543 A1**
(43) Date of publication of application: **25.02.2015**
(21) Application number: 13290196.8
(22) Date of filing: 20.08.2013
(51) Int. Cl.: G06Q 30/02

(54) **Contextualized travel offers**

(71) Applicant: Amadeus S.A.S., 06410 Biot (FR)
(72) Inventor: Tebourbi, Rim, 06600 Antibes (FR); Donadio, Jean Noel, 06410 Biot (FR); Di Costanzo, Pierre Philippe, 06220 Le Golfe Juan (FR); Collendavelloo, Yan, Haymarket NSW 2000 (AU)
(74) Representative: Samson & Partner

(57) **Abstract**

Methods, systems, and computer program products for generating contextualized travel-related offers for a traveler. A reservation system monitors travel activity for the traveler to detect travel events. The reservation system determines event parameters for a particular travel event responsive to detecting the particular travel event. Contextual data based at least in part on a user profile associated with the traveler and one or more booking initiators associated with a corresponding travel reservation is determined by the reservation system, and one or more contextualized travel-related offers based at least in part on the event parameters and the contextual data may be generated by the reservation system.

## Description

### Background

The invention is generally related to computers and computer software, and in particular to methods, systems, and computer program products for generating travel offers.

Computer technology is increasingly used in the travel industry to manage and support travel reservations, as well as data associated therewith. In particular, third party reservation agents, such as travel agents, and/or customers (e.g., travelers) often utilize computer based devices to interface with a travel reservation system, such as a Global Distribution System (GDS), to book travel arrangements and/or travel related services for the customer. When reserving travel related services using such reservation terminals in communication with such travel reservation systems, a travel agent and/or customer may initiate a reservation session between a reservation terminal and the travel reservation system to book one or more travel inventory items corresponding to the travel related services (e.g., flights, hotels, rail transportation, dining reservations, etc.) for a customer during the reservation session.

As computer technology is utilized to increasingly manage and support travel reservations, a continuing need exists in the art for improved computer based travel reservation systems, as well as methods and computer program products, for facilitating travel related service booking.

### Brief Summary

Embodiments of the invention generally comprise a method, system, and computer program product for generating travel-related offers for a traveler. Consistent with embodiments of the invention, travel activity corresponding to a traveler may be monitored to detect travel events. In response to detecting a particular travel event, embodiments of the invention may analyze the travel event to determine one or more event parameters corresponding to the particular travel event. Contextual data corresponding to the traveler and/or a third party reservation agent/travel provider associated with the traveler may be determined, and one or more travel-related offers may be generated for the traveler and/or the third party reservation agent based at least in part on the event parameters and the contextual data.

### Brief Description of the Several Views of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram of one or more reservation systems, inventory systems, travel reservation devices, user devices, and check-in devices consistent with embodiments of the invention.

FIG. 2 is a block diagram of a reservation system of FIG. 1.

FIG. 3 is a flowchart illustrating a sequence of operations that may be performed by the reservation system of FIG. 2 to generate one or more contextualized travel-related offers consistent with some embodiments of the invention.

FIG. 4 is a flowchart illustrating a sequence of operations that may be performed by the reservation system of FIG. 2 to determine contextual data that may be utilized to generate one or more contextualized travel-related offers consistent with some embodiments of the invention.

FIG. 5 is a flowchart illustrating a sequence of operations that may be performed by the reservation system of FIG. 2 to generate one or more contextualized travel-related offers consistent with some embodiments of the invention.

### Detailed Description

Embodiments of the invention provide a system, method, and computer program product for generating travel related offers for a traveler. In some embodiments of the invention, travel activity of the traveler may be monitored to detect travel events, and travel related offers may be generated for the traveler responsive to detecting a travel event. For example, a traveler may miss a flight (i.e., a travel event), and in some embodiments of the invention, one or more travel-related offers such as a hotel room for the night (if the traveler will not be able to get on an alternative flight), an alternative flight booking, and/or a discount coupon for an airport lounge (if the traveler will be waiting for an alternative flight) may be generated for the traveler responsive to detecting that the traveler missed the flight. Therefore, as illustrated by the example provided above, embodiments of the invention generate contextualized travel-related offers for a traveler responsive to travel events. In general, such a contextualized travel-related offer may be based at least in part on the travel related event, location, date and/or time, preferences of the traveler, origin and/or destination of a travel booking corresponding to the passenger, traveler history, and/or other individuals that are accompanying the traveler.

Consistent with embodiments of the invention, in response to detecting a particular travel event, event parameters corresponding to the particular travel event may be determined. Travel events generally refer to events and/or actions that may affect a travel reservation and/or the traveler. For example, a travel event may be an ordinary travel event, such as a search for a travel inventory item (e.g., searching for a flight), booking a travel inventory item (e.g., booking a flight), opening a document associated with a travel reservation (e.g., opening an itinerary), checking-in prior to a travel service, a traveler notification message (e.g., an email reminder, travel reservation related text message, etc.), and/or other such types of expected events. In addition, a travel event may be an unexpected travel event, such as a travel service delay, travel service cancellation, traveler no-show for a travel reservation, weather related events, and/or other such types of unexpected events. Since the types of travel events may vary, embodiments of the invention may be configured to generate contextualized travel-related offers based on the characteristics of such travel events. These characteristics may be referred to as event parameters.

In general, the event parameters of a travel event identify the type of event of the travel event and provides information associated with the travel event. For example, event parameters may include an associated time (e.g., time before a flight boards/departs), related events (e.g., a cancelled flight may be related to booking and/or canceling a hotel room), and environmental data that includes information related to where the event is taking place (e.g., weather at an origin and/or destination, map of a destination, traffic at a destination, airport information). In general, event parameters generally describes the nature of a travel event such that event parameters for a travel event provide information that may be utilized to generate travel-related offers for a traveler that would be useful given the nature of the travel event. For example, if the weather forecast at a traveler's destination includes a chance of rain, when embodiments of the invention detect this travel event (i.e., predicted to rain at destination), a generated travel-offer may include a discount coupon for a store at the origin airport that sells umbrellas. Similarly, a traveler who arrives in a new country with limited or poor public transportation may appreciate a travel-related offer for a taxi service.

As discussed above, event parameters generally describe a travel event such that travel-related offers may be contextualized based at least in part on the nature of the detected event. Similarly, contextual data corresponding to the user (i.e., user data), a company/corporation associated with the traveler (e.g., an employer), and/or the booking initiator (i.e., booking initiator data) may correspond to preferences, interests, status (e.g., time and location), travel history of the traveler, and/or content policy data for the booking initiator and/or associated company/corporation may be utilized in generating contextualized travel-related offers. With regard to user data of the contextual data, this type of contextual data generally describes characteristics, preferences, and/or interests of the user (which is generally the traveler). For example, the contextual data corresponding to the traveler may provide information associated with the demographic information and/or preferences of the user, such as the user's age, gender, citizenship, home city, preferred travel provider, preferred hotel, preference for rental cars or taxi, etc. The contextual data corresponding to the traveler may describe the situation of the user (e.g., where the user is located, the date/time, whether the user is on a business or leisure trip, whether the user is traveling with others, etc.). Moreover, contextual data corresponding to the user may describe and/or be based on travel history associated with the user, such as previous travel reservations made for the user, airlines the user has used previously, geographic regions the user has visited, types of leisure activities for which the user has previously purchased related items/services, reservation request history (e.g., travel destinations/services the user has previously priced or investigated but not necessarily booked), the types of travel bookings previously made for travel reservations, etc.

Furthermore, some contextual data may correspond to a booking initiator associated with the travel services of the traveler. In general, a booking initiator refers to a third party reservation agent (e.g., a travel agent) and/or a travel services provider (e.g., an airline, hotel, restaurant, etc.). In some embodiments of the invention, a booking initiator associated with a travel event may have policies/rules regarding content display. For example, a travel agency may block content from some travel providers/service providers or prefer to display only a certain type of content. Similarly, a travel service provider may have policies/rules associated with content delivery such as types of content, method for delivering content, particular classes of travelers to which content may be delivered, etc. In some embodiments of the invention, policies of such booking initiators may be included in the contextual data such that any travel-related offers generated for a travel event meet the policies/rules of associated booking initiators.

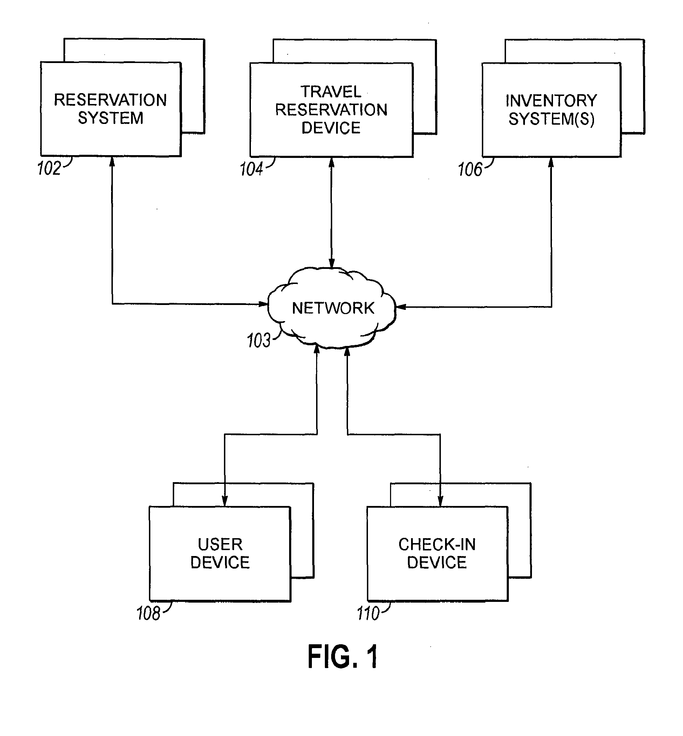

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency or other such travel reservation service) may initialize a reservation session with the reservation system 102 to communicate a booking request and/or other such relevant data to the reservation system 102. The travel reservation device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent may interface with the reservation system 102 using the travel reservation device 104 in a reservation session to provide data for a booking request. In turn, the reservation system may interface with each inventory system 106 of each travel merchant that provides a travel inventory item that generally requires an availability determination (e.g., a flight) to determine availability for each travel inventory item requiring an availability determination for the booking request. Moreover, while the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and inventory system 106 may be components of a GDS.

Consistent with embodiments of the invention, one or more user devices 108 and/or check-in devices 110 may be connected to the network 103. The user device 108 may be a personal computing device, tablet computer, thin client terminal, smart phone and/or other such computing device. The check-in device 110 may be a check-in kiosk and/or other such computing device utilized for checking in and/or updating a travel reservation prior to using a travel related service. For example, a check-in device 110 may be a self check-in kiosk at an airport, a travel provider assisted check-in kiosk at an airport, a self service ticketing device for a rail station, a boarding/customer service terminal at an airport gate, a user device executing an application for check-in, and/or other such types of devices. As described in further detail below, in some embodiments of the invention, one or more contextualized travel-related offers may be communicated to a travel reservation device 104, a user device 108, and/or a check-in device 110 based at least in part on event parameters of a detected event and/or contextualized data corresponding to the user and/or booking initiator.

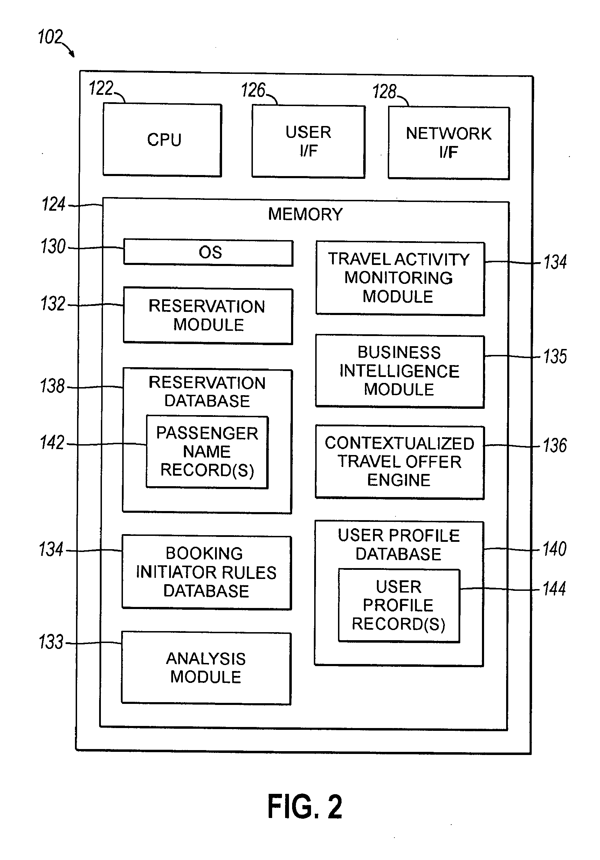

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the travel and reservation system 102.

For interface with a user or operator, the reservation system 102 may include a user interface 126 incorporating one or more user input/output devices, e.g., a keyboard, a pointing device, a display, a printer, etc. Otherwise, data may be communicated to and from another computer or terminal (e.g., the reservation device 104, the inventory system 106, user device 108, and/or check-in device 110 over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132, a business intelligence module 133, a travel activity monitoring module 134, an analysis module 135, and a contextualized travel offer engine 136. In general, the reservation module 132 may be configured to generate a reserved travel booking based on received booking data. The analysis module 133 may be configured to monitor traveler behavior of one or more travelers to determine traveler preferences and/or trends. The travel activity monitoring module 134 may be configured to monitor travel activity of one or more travelers to detect any travel events for the one or more travelers. The business intelligence module may be configured to analyze traveler behavior, traveler trends, traveler activity, and/or other such types of information to generate and/or enrich contextual data with business intelligence data. Business intelligence data may include, for example, information associated with market trends (e.g., a particular age group of travelers typically spend a maximum amount on lodgings per night, a particular demographic group take vacation in particular months of the year, travelers that spend over a particular amount for a flight booking have a high probability of purchasing flight cancellation insurance, etc). In general business intelligence data may be less precise regarding preferences of a particular traveler as compared to profile information about the particular traveler, however such business intelligence data may be considered in complement with such profile information and/or when profile information is limited. The contextualized travel offer engine may be generally configured generate contextualized travel-related offers for a particular traveler in response to detecting at travel event associated with the travel activity of the particular traveler. Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 may be implemented in one or more servers. Consistent with embodiments of the invention, the modules 132-136 and/or other such modules/applications may be executing on the reservation system 102, and the modules 132-136 may cause the processor 122 of the reservation system 102 to perform operations consistent with embodiments of the invention.

The memory 124 of the travel and reservation system 102 may generally store one or more databases including, for example, a reservation database 138, a user profile database 140, and/or a booking initiator rules database 141. The databases 138, 140, 141 may contain data and supporting data structures that store and organize the data. In particular, the databases 138, 140, 141 may be arranged with any database organization and/or structure including, but not limited to, a relational database, a hierarchical database, a network database, and/or combinations thereof. A database management system in the form of a computer software application executing as instructions on a processing unit of the reservation system 102 is used to access the information or data stored in records of the databases 138, 140, 141 in response to a query.

The reservation database 138 may store one or more passenger name records (PNR) 142, where each passenger name record 142 corresponds to a travel reservation for one or more passengers, including for example, the name of the passenger(s), the itinerary for the passenger(s), contact information for a travel agent or travel merchant associated with the travel reservation, ticketing information for the travel reservation, payment information, personal information for the passenger, contact information for the passenger(s), and/or other such information. In general, the reservation system 102 may generate a passenger name record 142 based on received booking data for one or more travel customers, store the passenger name record 142 in the reservation database 138, and communicate the passenger name record 142 to one or more a third party reservation agent and/or other travel merchant when a travel reservation is made for the one or more travel customers.

The user profile database 140 may store one or more user profile records 144, where each user profile record 144 corresponds to a travel customer of the reservation system (i.e., a traveler/user). In general, a user profile record 144 may correspond to a travel customer that has created an account to store information associated with the travel customer. For example, a user profile record 144 may store contact information for the travel customer (e.g., an email address, mobile telephone number, etc.), payment information for the travel customer, information included in a passenger name record 142, and/or other such information. Furthermore, the user profile record 144 may store demographic information associated with the traveler including for example, age, gender, home city, and/or other such information. Moreover, a user profile record 144 may be stored for the travel customer for each booking initiator that the travel customer has used.

Moreover, the user profile record 144 may store information associated with travel history of the traveler, including for example, historical travel reservations (e.g., flight bookings, hotel bookings, etc.), geographic locations that the traveler has visited and/or traveled through, prices historically paid by the traveler for various travel services, types/class of travel services booked in the travel reservations, and/or other such relevant historical travel related data. In some embodiments, the user profile record 144 may include data corresponding to behavioral data, including for example, internet browsing history, travel reservation request history, and/or other such information that may be utilized to identify points of interests and/or travel-related offers that the user may find of interest. The user profile record 144 may store information corresponding to the traveler's current travel (e.g., the origin and destination of any travel bookings, hotel information, whether the current travel is for business or leisure, whether any additional individuals (e.g., spouse, children, business colleague, etc.) are traveling with the traveler, a current location of the traveler), preferences of the traveler (e.g., preferred hotel chain, preferred booking class, etc.), and/or other such information. In addition, the user profile record 144 may store information indicating a method of communication to be utilized to communicate with the traveler. For example, an account corresponding to a user profile record 144 may be logged into by the corresponding traveler with a user device 108 executing an application that interfaces with the reservation system 102 such that the traveler may receive, review, and/or accept contextualized travel-related offers with the user device 108.

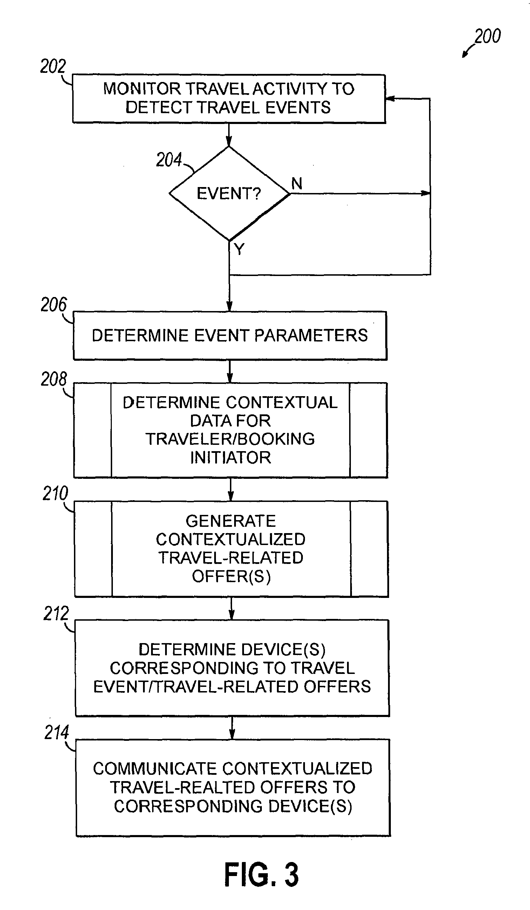

With reference to FIG. 3, this figure provides a flowchart 200 that illustrates a sequence of operations that may be performed by a reservation system 102 consistent with embodiments of the invention to generate contextualized travel-related offers in response to a travel event for a traveler. While embodiments of the invention may be described herein with respect to a singular traveler, the invention is not so limited. In general, a reservation system 102 consistent with embodiments of the invention may be configured to continuously monitor the travel activity of a plurality of travelers concurrently, detect one or more travel events concurrently, and generate contextualized travel-related offers for one or more travelers concurrently. As shown, the reservation system 102 monitors travel activity for a traveler to detect travel events (block 202). The reservation system continues monitoring the travel activity for the traveler if a travel event is not detected ("N" branch of block 204).

In response to detecting a particular travel event ("Y" branch of block 204), the reservation system may determine event parameters associated with the travel event (block 206). Flowchart 200 illustrates the detection of a travel event as causing a sequence of operations to be performed to generate one or more contextualized travel-related offers; as mentioned above, embodiments of the invention may also continue to monitor the travel activity to detect other/additional travel events concurrent with generating the one or more contextualized travel-related offers for the detected travel event (block 207). In general, a travel event may be expected or unexpected. For example, an expected travel event may be the traveler checking-in at an airport before boarding a flight. In this example, the event parameters may include, for example, the time of the check-in, whether the traveler is at a self check-in kiosk or an operator assisted check-in kiosk, the time before the traveler's flight is expected to board, the gate number at which the traveler is to board the flight, whether the traveler has a confirmed seating assignment, the number of bags the traveler is checking, and/or other such information. An unexpected travel event generally refers to a travel event that may occur (e.g,. an unexpected occurrence), including for example, a flight being delayed or cancelled, weather at a location, the traveler missing a flight, and/or other such types of unexpected events. Event parameters for an unexpected event may include, the geographic location of the traveler, the local time, the weather at a geographic location that the traveler is traveling to and/or connecting through, the geographic location and/or time of the unexpected travel event, a flight status (e.g., delayed, on-time, canceled, etc.), a passenger status (e.g., no-show), and/or other such information. In general, the event parameters include information that provides context for the travel event, where contextualized travel-related offers may be generated based at least in part on such event parameters. For example, if a traveler misses a flight, a contextualized travel-related offer may be for an alternative flight with the same and/or similar origin and destination. In contrast, a travel-related offer for a dining reservation at the destination shortly after the missed flight is expected to arrive generally would not be a contextualized travel-related offer.

Therefore, some embodiments of the invention may generate contextualized travel-related offers in response to a travel event based at least in part on the context of the travel event described by event parameters. For example, event parameters may provide information indicating whether the travel event is expected or unexpected, in which step of a journey (e.g., preparation phase, research, pre-booking, booking phase, checking-in, completed a segment, etc.) the traveler is when the travel event occurs, the time that the travel event occurred, time left before an expected event (e.g., boarding a flight, checking in to a hotel, etc.), interrelated events (e.g., if a flight is delayed for a day, a hotel booking may be needed), and/or environmental information about the location of the traveler and/or travel event (e.g., weather forecast, street traffic, state of the airport, map of the city, etc.).

The reservation system 102 may determine contextual data associated with the traveler and/or the booking initiator (block 208). In general contextual data may be extracted, collected, and/or aggregated about the traveler, an entity associated with the passenger (e.g., the passenger's employer), and/or the booking initiator. Contextual data corresponding to the traveler (also referred to herein as user data) may include demographic information, travel history, similar user's data, and/or current travel information. Contextual data corresponding to the booking initiator and/or entity associated with the passenger (also referred to herein as booking initiator rules/policies) generally corresponds to content and/or third party travel service providers that the booking initiator may wish to promote, limit, and/or exclude from contextualized travel-related offers. Contextual data corresponding to the booking initiator may also define content delivery rules (e.g., when to communicate a contextualized travel-related offer, defined classes of travelers to which content may be delivered, etc.). Based at least in part on the event parameters and/or the contextual data, the reservation system 102 may generate one or more contextual ized travel-related offers for the traveler (block 210). In general, a contextualized travel-related offer may correspond to the situation of the traveler, the preferences/interests of the traveler, and/or a detected travel event. For example, if a traveler is checking in for a flight that departs in a relatively short amount of time, embodiments of the invention may not generate contextualized travel-related offers associated with services/stores at the origin airport since the traveler is unlikely to have enough time to use them. In this example, embodiments of the invention may generate contextualized travel-related offers associated with services/stores at an airport that the traveler is connecting through if the traveler has an extended lay-over time at the connecting airport.

Consistent with some embodiments of the invention, the reservation device 102 may determine one or more devices corresponding to the travel event and/or travel-related offers (block 212). In general, depending on the travel event and/or the travel-related offer, one or more devices may be relevant. For example, if a travel event corresponds to the traveler checking-in at a self check-in kiosk, embodiments of the invention may determine that the check-in kiosk corresponds to the travel event. As another example, if a traveler missed a flight, embodiments of the invention may determine that a user device 108 (such as a smart phone) may be a relevant device to which contextualized travel-related offers may be communicated to the user. The reservation system 102 may communicate the contextualized travel-related offers to the determined corresponding devices (block 214). For example, if the traveler is using a self check-in kiosk to check in (i.e., the travel event), embodiments of the invention may communicate a coupon for a store in the airport to the self check-in kiosk, and the self check-in kiosk may output the coupon for the traveler concurrent with the check in process. For example, the coupon may be printed on a portion of a document output at check-in such as a portion of a boarding pass. Similarly, if a traveler misses a flight, embodiments of the invention may communicate a travel-related offer for an alternative flight to the traveler's smart phone in the form of a text message, email, and/or through a dedicated application executing on the smart phone. As another example, if a travel agent is performing reservation services for a traveler, upon the travel agent booking a travel inventory item (the travel event), embodiments of the invention may communicate a contextualized travel-related offer to the travel reservation device 104 based on the booked travel inventory item, the traveler, and/or policies of the travel agency and/or travel provider of the travel inventory item.

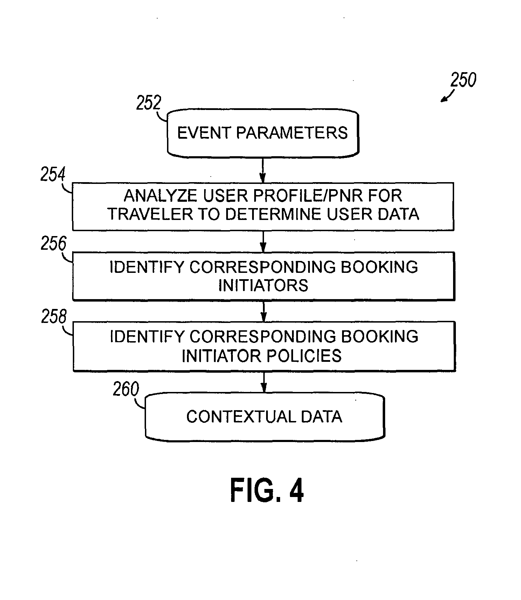

FIG. 4 provides a flowchart 250 that illustrates a sequence of operations that may be performed by the reservation system 102 consistent with embodiments of the invention to determine contextual data corresponding to a travel event associated with a traveler. In general, the reservation system 102 may process event parameters of a travel event (block 252), and analyze a user profile and/or PNR associated with the traveler to determine user data for the traveler (block 254). The user data may include demographic information, travel history information, tracking data, behavioral analysis data, business intelligence data, and/or current travel information for the traveler. The reservation system 102 may determine one or more booking initiators corresponding to the travel event and the traveler (block 256), where a corresponding booking initiator generally refers to a third party reservation agent or travel services provider that is associated with any booked travel inventory item that may be affected by the travel event. The reservation system 102 may determine policies/rules of any identified booking initiator and/or any entity associated with the traveler (block 258), and the reservation system 102 may determine contextual data (block 260) based on the determined user data and the identified booking initiator/associated entity policies.

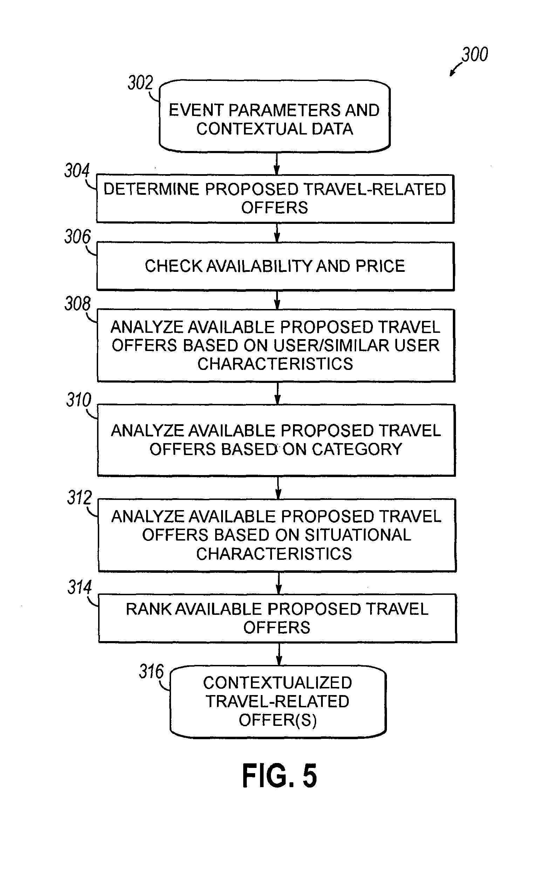

Turning now to FIG. 5, this figure provides a flowchart 300 that illustrates a sequence of operations that may be performed by the reservation system 102 consistent with embodiments of the invention to generate contextualized travel-related offers consistent with embodiments of the invention. The reservation system 102 may process event parameters and contextual data (block 302) associated with a traveler and travel event. The reservation system 102 may determine proposed travel-related offers (block 304). In some embodiments, determining the proposed travel-related offers may be based at least in part on the event parameters and/or the contextual data. In general, the proposed travel-related offers suit the traveler for the context defined by the event parameters and contextual data. The reservation system 102 may check availability and pricing of any proposed travel-related offers that correspond to a travel recommendation that includes travel inventory items related to travel products (e.g., flights, rail travel, etc.) to insure that the proposed travel-related offers are available for the correct price prior to communicating the proposed travel-related offers to the traveler (block 306). In general, the reservation system 102 may determine booking availability and price for a travel product by interfacing with an inventory system 106 that manages the travel product.

The reservation system 102 may analyze proposed travel offers based at least in part on user profile characteristics indicated in the contextual data as well as similar user profile characteristics (block 308). In general, based on data stored in the user profile indicating the traveler's preferences, travel history, travel purpose, and/or interests, some embodiments of the invention may determine the proposed travel offers more likely to be accepted (e.g., used, booked, purchased, reserved, etc.) by the traveler and/or relevant to the traveler in the given context of the travel event. Moreover, embodiments of the invention may analyze preferences, travel history, and/or interests of other user profiles determined to be similar to the traveler's user profile to determine types of proposed travel-related offers likely to be accepted by the traveler and/or relevant to the traveler. A similar user profile may be a user profile that includes similar demographic information (similar age range, common citizenship, common home city) and/or as well as similar preferences (similar hotel preference, often book economy class flights, etc.). In general, data from the similar user profiles may be analyzed to determine types of travel-related offers that the traveler is more likely to accept. For example, based on similar user profiles having the same age range and hotel preferences, embodiments of the invention may determine that the traveler is more likely to accept a travel-related offer for a flight upgrade as compared to a travel-related offer for a coupon to a store at the airport. In this example, embodiments of the invention score the flight upgrade travel-related offer higher relative to the coupon.

The reservation system 102 may analyze the available proposed travel offers based at least in part on a category associated with each proposed travel offer to determine which available proposed travel offers are likely to be accepted by the traveler based on the type of offer (i.e., category) (block 310). In general, each proposed travel offer that may be presented to the traveler may be associated with a category. Categories generally relate to a major characteristic of different types of proposed travel offers, including for example, entertainment, airport service, food, sale, airline, hotel, etc. For example, a sale promotion for suitcases in an airport may be categorized in the category of sale. Similarly, a taxi service may be categorized as a service. Generally, the usefulness of categories of proposed travel offers to a traveler may differ depending on the traveler's situation. Therefore, the likelihood that a proposed travel related offer is accepted by the traveler varies based at least in part on category. Hence, in some embodiments the reservation server 102 may analyze the available proposed travel offers based on category to determine available proposed travel offers in categories that are likely to be useful to the passenger.

In addition, the reservation system 102 may analyze the available proposed travel offers based at least in part on a situational characteristics associated with the traveler and each proposed travel offer to determine which available proposed travel offers are likely to be accepted by the traveler based on the situation of the traveler (block 312). In general, each situation includes one or more attributes that prioritize a particular category of travel offers. For example, if the situational characteristics indicate that a flight is canceled for the traveler, a proposed travel offer for an alternative flight is determined to be the most relevant (i.e., likely to be accepted) and is given priority over other categories of proposed travel offers.

Based on the analysis of the proposed travel offers, the reservation system ranks the proposed travel offers (block 314) relative to the likelihood that each proposed travel offer may be accepted. Therefore, embodiments of the invention may rank available proposed travel offers based at least in part on: the traveler's demographic information, preferences, travel history and/or interests; similar user's behavior and/or travel history; content relevance; and/or situational characteristics/context. Based on the ranking of the proposed travel offers, the reservation system may select one or more of the proposed travel offers to be communicated to the traveler as one or more contextualized travel-related offers (block 316). Consistent with embodiments of the invention, each proposed travel offer may be scored with relation to relevance (i.e., predicted likelihood of acceptance) based at least in part on the user characteristics determined from the user profile of the traveler, similar user characteristics determined from similar user profiles, content categorization, as well as situational characteristics. Furthermore, a weighting may be determined for each type of criterion, such that an overall relevance may be determined based at least in part on the determined relevance for each criterion. For example, in some embodiments of the invention, determined relevance based on the user profile of the traveler may assigned a higher weight relative to the remaining criterion such that proposed travel offers having a high relevance based on the user profile of the traveler may be more likely to have a higher overall relevance.

As described herein, embodiments of the invention generate one or more contextualized travel-related offers for a traveler in response to a travel event occurring for the traveler. In general, a contextualized travel offer generated by the reservation system 102 is based at least in part on the traveler's preferences and interests. Consistent with some embodiments of the invention, the traveler's travel history and/or demographic information may be stored in a corresponding user profile, and embodiments of the invention may generate one or more contextualized travel-related offers based at least in part on the travel history and/or demographic information. In these embodiments, historical data and/or the traveler's preferences may be analyzed to determine one or more travel-related offers that may be interesting and/or useful for the traveler, which generally relates to travel-related offers more likely to be accepted by the traveler. Therefore, the contextualized travel-related offers generated by embodiments of the invention may present the traveler with targeted/contextualized advertising. Moreover, a contextualized travel offer may correspond to the traveler's situation, where the traveler's situation may be described by event parameters such as location, time, current phase in a journey. In embodiments of the invention, one or more travel-related offers may be selected from a plurality of possible travel-related offers based at least in part on the traveler's situation to thereby generate one or more contextualized travel-related offers, where the contextualized travel-related offers address a possible need of the traveler in the context of the traveler's situation.

In addition, embodiments of the invention dynamically generate the contextualized travel-related offers for a traveler in response to travel events, even unexpected travel events. As one may imagine, such contextualized travel-related offers may be valuable to a traveler in a time of need, such as when a flight is delayed, and an embodiment of the invention communicates a contextualized travel-related offer to the traveler that corresponds to an alternative flight. Hence, embodiments of the invention monitor the traveler's travel activity and dynamically react to the changing needs of the traveler. The reservation system 102 may be configured to collect and monitor data associated with the traveler's travel activity, where such collection and monitoring may be based at least in part on the travel reservation information stored in the reservation system 102. For example, the reservation system 102 may determine weather information for locations associated with the traveler's travel reservation. The centralization of data collection and monitoring by the reservation system 102 facilitates generating one or more contextualized travel-related offers at any point along the traveler's journey. Where one or more travel offers may be possible, embodiments of the invention rank the possible travel offers as described herein based on relevance of one or more criterion, such that the relevant content (i.e., contextualized travel-related offers) may be delivered to the traveler.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for generating travel-related offers for a traveler, the method comprising:
monitoring, with at least one processor, travel activity corresponding to the traveler to detect travel events corresponding to the traveler;
in response to detecting a particular travel event corresponding to the traveler, analyzing the particular travel event with the at least one processor to determine event parameters corresponding to the particular travel event;
determining, with the at least one processor, contextual data corresponding to the traveler; and
generating at least one contextualized travel-related offer for the traveler based at least in part on the event parameters and the contextual data.

2. The method of claim 1 wherein the at least one travel-related offer corresponds to a travel recommendation, and generating the at least one contextualized travel-related offer for the traveler based at least in part on the event parameters and contextual data comprises:
determining booking availability for travel products associated with the travel recommendation; and
determining a price for at least one travel product available for booking.

3. The method of claim 1 or claim 2, further comprising:
communicating the at least one contextualized travel-related offer to at least one of:
- at least one device corresponding to the travel event, wherein the at least one device corresponding to the travel event is determined beforehand,
- a user device associated with the traveler, and
- a travel device associated with the travel activity.

4. The method of claim 3 wherein the travel device comprises a check-in device at an airport, and further comprising:
in response to the traveler checking in at the check-in device, printing a boarding pass for the traveler that includes information based at least in part on the at least one contextualized travel-related offer.

5. The method of any of the preceding claims further comprising:
obtaining a plurality of policies for a travel service associated with the traveler,
wherein generating the at least one contextualized travel-related offer for the traveler is based at least in part on the policies for the travel service associated with the traveler.

6. The method of any of the preceding claims wherein the particular travel event is triggered by an unpredictable occurrence.

7. The method of any of the preceding claims wherein the contextual data is selected from the group consisting of demographic information about the traveler, similar user behavior, travel history of the traveler, type of travel, location of the traveler, and combinations thereof.

8. The method of any of the preceding claims, wherein generating the at least one contextualized travel-related offer for the traveler based at least in part on the event parameters and the contextual data comprises:
determining a plurality of proposed travel-related offers based at least in part on the event parameters and contextual data;
analyzing each of the plurality of proposed travel-related offers to determine a relevance of each proposed travel-related offer to the travel event and the traveler;
ranking each of the plurality of proposed travel-related offers based on the relevance of each proposed travel-related to the travel event and traveler; and
selecting at least one of the plurality of proposed travel-related offers as the at least one contextualized travel-related offer based at least in part on the rank of each of the plurality of proposed travel-related offers.

9. A system for generating travel-related offers for a traveler, the system comprising:
at least one processor; and
program code configured to be executed by the at least one processor to cause the at least one processor to monitor travel activity corresponding to the traveler to detect travel events corresponding to the traveler, analyze a particular travel event to determine event parameters corresponding to the particular travel event responsive to detecting the particular travel event corresponding to the traveler, determine contextual data corresponding to the traveler, and generate at least one contextualized travel-related offer for the traveler based at least in part on the event parameters and the contextual data.

10. The system of claim 9, wherein the at least one travel-related offer corresponds to a travel recommendation, and the program code being configured to cause the at least one processor to generate the at least one contextualized travel-related offer for the traveler based at least in part on the event parameters and the contextual data comprises:
the program code being configured to cause the at least one processor to determine booking availability for travel products associated with the travel recommendation, and determine a price for at least one travel product available for booking.

11. The system of claim 9 or claim 10, wherein the program code is further configured to cause the at least one processor to communicate the at least one contextualized travel-related offer to at least one of
- at least one device corresponding to the travel event, wherein the program code is configured to cause the at least one processor to determine the at least one device corresponding to the travel event being beforehand,
- a user device associated with the traveler, and
- a travel device associated with the travel activity.

12. The system of any of claims 9 to 11, wherein the program code is further configured to cause the at least one processor to obtain a plurality of policies for a travel service associated with the traveler, and the program code being configured to cause the at least one processor to generate the at least one contextualized travel-related offer for the traveler based at least in part on the policies for the travel service associated with the traveler.

13. The system of any of claims 9 to 12, wherein the particular event is triggered by an unpredictable occurrence.

14. The system of any of claims 9 to 13, wherein the program code being configured to cause the at least one processor to generate the at least one contextualized travel-related offer for the traveler comprises:
the program code being configured to cause the at least one processor to determine a plurality of proposed travel-related offers based at least in part on the event parameters and contextual data, analyze each of the plurality of proposed travel-related offers to determine a relevance of each proposed travel-related offer to the travel event and the traveler, rank each of the plurality of proposed travel-related offers based on the relevance of each proposed travel-related offer to the travel event and traveler, and select at least one of the plurality of proposed travel-related offers as the at least one contextualized travel-related offer based at least in part on the rank of each of the plurality of proposed travel-related offers.

15. A computer program product comprising:
a computer readable storage medium; and
program code stored on the computer readable storage medium and configured upon execution to cause at least one processor to monitor travel activity corresponding to a traveler to detect travel events corresponding to the traveler, analyze a particular travel event to determine event parameters corresponding to the particular travel event responsive to detecting the particular travel event corresponding to the traveler, determine contextual data corresponding to the traveler, and generate at least one contextualized travel-related offer for the traveler based at least in part on the event parameters and the contextual data.
